# EUROPEAN PATENT APPLICATION

(11) **EP 4 550 904 A1**
(43) Date of publication of application: **07.05.2025**
(21) Application number: 22948321.9
(22) Date of filing: 28.06.2022
(51) Int. Cl.: H04W 72/04, H04L 1/00

(54) **INDICATION METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/102071
(87) International publication number: WO 2024/000201

(57) **Abstract**

Disclosed in embodiments of the present disclosure is an indication method, which can be applied to the technical field of communications. The method executed by a terminal device comprises: receiving a scheduling instruction; acquiring transmission configuration information from the scheduling instruction; and determining a transmission parameter of each of a plurality of scheduled cells according to the transmission configuration information, such that the signaling overhead of indication information can be effectively reduced when multi-cell scheduling is supported.

## Description

### TECHNICAL FIELD

The present disclosure relates to the field of communication technology, in particular to an indication method and apparatus.

### BACKGROUND

In a communication system, for multi-cell joint scheduling, different scenarios or different information fields may usually require different signaling to indicate a cell scheduling mechanism, which may cause a large amount of signaling overhead. Therefore, how to reduce the signaling overhead required for the multi-cell joint scheduling is crucial.

### SUMMARY

Embodiments of the present disclosure provide an indication method and apparatus.

According to a first aspect of the embodiments of the present disclosure, an indication method is provided, the indication method is performed by a terminal and includes: receiving a scheduling instruction; obtaining transmission configuration information from the scheduling instruction; and determining a transmission parameter of each of a plurality of scheduled cells according to the transmission configuration information.

In the present disclosure, the terminal may firstly receive the scheduling instruction, and then obtain the transmission configuration information from the scheduling instruction and determine the transmission parameter of each of the plurality of scheduled cells according to the transmission configuration information, so that signaling overhead for indicating information can be effectively reduced in case of supporting multi-cell scheduling.

Optionally, the transmission configuration information comprises: a plurality of pieces of first indication information, wherein the plurality of pieces of first indication information are respectively configured to indicate transmission parameters of the plurality of scheduled cells.

Optionally, determining the transmission parameter of each of the plurality of scheduled cells according to the transmission configuration information comprises: determining a reference cell among the plurality of scheduled cells; obtaining a transmission parameter of the reference cell as a reference transmission parameter; obtaining second indication information from the transmission configuration information, wherein the second indication information is configured to indicate offset values of other cells among the plurality of scheduled cells; and determining transmission parameters of the other cells according to the reference transmission parameter and the second indication information.

Optionally, determining the transmission parameter of each of the plurality of scheduled cells according to the transmission configuration information comprises: obtaining a transmission parameter configuration table; and determining the transmission parameter of each cell according to the transmission configuration information and the transmission parameter configuration table.

Optionally, the transmission parameter configuration table comprises a reference transmission parameter and an offset value.

Optionally, the scheduling instruction is a scheduling instruction for one of the plurality of scheduled cells.

Optionally, the transmission parameter comprises at least one of: a modulation and coding scheme (MCS); time domain resource allocation (TDRA); or frequency domain resource allocation (FDRA).

Optionally, the scheduling instruction is downlink control information (DCI).

According to a second aspect of embodiments of the disclosure, an indication method is provided, the method is performed by a network device and includes: sending a scheduling instruction to a terminal, in which the terminal determines a transmission parameter of each of a plurality of scheduled cells according to transmission configuration information contained in the scheduling instruction.

In the present disclosure, the network device may send the scheduling instruction to the terminal, the scheduling instruction may include the transmission configuration information, and the terminal may determine the transmission parameter of each of the plurality of scheduled cells according to the transmission configuration information contained in the scheduling instruction, that is, a transmission mechanism of a plurality of different cells that are jointly scheduled may be indicated in one scheduling instruction, so that signaling overhead for indicating information can be effectively reduced in case of supporting multi-cell scheduling.

Optionally, the transmission configuration information comprises: a plurality of pieces of first indication information, wherein the plurality of pieces of first indication information are respectively configured to indicate transmission parameters of the plurality of scheduled cells.

Optionally, sending the scheduling instruction to the terminal comprises: determining a reference cell among the plurality of scheduled cells; determining a transmission parameter of the reference cell; sending the scheduling instruction to the terminal, wherein the scheduling instruction comprises the reference cell, the transmission parameter of the reference cell and the transmission configuration information, wherein the transmission configuration information comprises second indication information configured to indicate offset values of other cells among the plurality of scheduled cells.

Optionally, sending the scheduling instruction to the terminal comprises: sending a transmission parameter configuration table to the terminal, to cause the terminal to determine the transmission parameter of each cell according to the transmission configuration information and the transmission parameter configuration table.

Optionally, the transmission parameter configuration table comprises a reference transmission parameter and an offset value.

Optionally, the scheduling instruction is a scheduling instruction for one of the plurality of scheduled cells.

Optionally, the transmission parameter comprises at least one of: a modulation and coding scheme (MCS); time domain resource allocation (TDRA); or frequency domain resource allocation (FDRA).

Optionally, the scheduling instruction is downlink control information (DCI).

According to a third aspect of embodiments of the disclosure, a terminal is provided. The terminal includes a transceiver module, configured to receive a scheduling instruction; and a processing module, configured to obtain transmission configuration information from the scheduling instruction, and determine a transmission parameter of each of a plurality of scheduled cells according to the transmission configuration information.

In the present disclosure, the scheduling instruction may be received firstly, and then the transmission configuration information may be obtained from the scheduling instruction and the transmission parameter of each of the plurality of scheduled cells may be determined according to the transmission configuration information, so that signaling overhead for indicating information can be effectively reduced in case of supporting multi-cell scheduling.

Optionally, the transmission configuration information comprises: a plurality of pieces of first indication information, wherein the plurality of pieces of first indication information are respectively configured to indicate transmission parameters of the plurality of scheduled cells.

Optionally, the processing module is further configured to: determine a reference cell among the plurality of scheduled cells; obtain a transmission parameter of the reference cell as a reference transmission parameter; obtain second indication information from the transmission configuration information, wherein the second indication information is configured to indicate offset values of other cells among the plurality of scheduled cells; and determine transmission parameters of the other cells according to the reference transmission parameter and the second indication information.

Optionally, the processing module is further configured to: obtain a transmission parameter configuration table; and determine the transmission parameter of each cell according to the transmission configuration information and the transmission parameter configuration table.

Optionally, the transmission parameter configuration table comprises a reference transmission parameter and an offset value.

Optionally, the scheduling instruction is a scheduling instruction for one of the plurality of scheduled cells.

Optionally, the transmission parameter comprises at least one of: a modulation and coding scheme (MCS); time domain resource allocation (TDRA); or frequency domain resource allocation (FDRA).

Optionally, the scheduling instruction is downlink control information (DCI).

According to a fourth aspect of embodiments of the disclosure, a network device is provided. The network device includes a transceiver module. The transceiver module is configured to send a scheduling instruction to a terminal, in which the terminal determines a transmission parameter of each of a plurality of scheduled cells according to transmission configuration information contained in the scheduling instruction.

Optionally, the transmission configuration information comprises: a plurality of pieces of first indication information, wherein the plurality of pieces of first indication information are respectively configured to indicate transmission parameters of the plurality of scheduled cells.

Optionally, the network device further includes a processing module. The processing module is further configured to: determine a reference cell among the plurality of scheduled cells; and determine a transmission parameter of the reference cell. The transceiver module is configured to send the scheduling instruction to the terminal, wherein the scheduling instruction comprises the reference cell, the transmission parameter of the reference cell and the transmission configuration information, wherein the transmission configuration information comprises second indication information configured to indicate offset values of other cells among the plurality of scheduled cells.

Optionally, the transceiver module is further configured to: send a transmission parameter configuration table to the terminal, to cause the terminal to determine the transmission parameter of each cell according to the transmission configuration information and the transmission parameter configuration table.

Optionally, the transmission parameter configuration table comprises a reference transmission parameter and an offset value.

Optionally, the scheduling instruction is a scheduling instruction for one of the plurality of scheduled cells.

Optionally, the transmission parameter comprises at least one of: a modulation and coding scheme (MCS); time domain resource allocation (TDRA); or frequency domain resource allocation (FDRA).

Optionally, the scheduling instruction is downlink control information (DCI).

According to a fifth aspect of embodiments of the present disclosure, a communication apparatus is provided, including: a processor. When the processor calls computer programs stored in the memory, the method according to the first aspect of embodiments of the present disclosure is performed.

According to a sixth aspect of embodiments of the present disclosure, a communication apparatus is provided, including: a processor. When the processor calls computer programs stored in the memory, the method according to the second aspect of embodiments of the present disclosure is performed.

According to a seventh aspect of embodiments of the present disclosure, a communication apparatus is provided, including: a processor and a memory for storing computer programs, when the computer programs stored in the memory are executed by the processor, the communication apparatus is caused to execute the method according to the first aspect of embodiments of the present disclosure.

According to an eighth aspect of embodiments of the present disclosure, a communication apparatus is provided, including: a processor and a memory for storing computer programs, when the computer programs stored in the memory are executed by the processor, the communication apparatus is caused to execute the method according to the above second aspect of embodiments of the present disclosure.

According to a ninth aspect of embodiments of the present disclosure, a communication apparatus is provided, including: a processor and an interface circuit, in which the interface circuit is configured to receive code instructions and transmit the code instructions to the processor; and the processor is configured to run the code instructions to cause the communication apparatus to execute the method according to the first aspect of embodiments of the present disclosure.

According to a tenth aspect of embodiments of the present disclosure, a communication apparatus is provided, including: a processor and an interface circuit, in which the interface circuit is configured to receive code instructions and transmit the code instructions to the processor; and the processor is configured to run the code instructions to cause the communication apparatus to execute the method according to the second aspect of embodiments of the present disclosure.

According to an eleventh aspect of embodiments of the present disclosure, a communication system is provided. The system includes the terminal described in the third aspect, and the network device described in the fourth aspect; or the system includes the communication apparatus described in the fifth aspect, and the communication apparatus described in the sixth aspect; or the system includes the communication apparatus described in the seventh aspect, and the communication apparatus described in the eighth aspect; or the system includes the communication apparatus described in the ninth aspect, and the communication apparatus described in the tenth aspect.

According to a twelfth aspect of embodiments of the present disclosure, a computer-readable storage medium for storing instructions used by the above terminal is provided, in which when the instructions are executed, the terminal is caused to perform the method according to the first aspect of embodiments of the present disclosure.

According to a thirteenth aspect of embodiments of the present disclosure, a computer-readable storage medium for storing instructions used by the above network device is provided, in which when the instructions are executed, the network device is caused to perform the method according to the second aspect of embodiments of the present disclosure.

According to a fourteenth aspect of the embodiments of the present disclosure, a computer program product including computer programs is provided. When the computer programs are executed by a computer, the computer is caused to perform the method according to the first aspect of embodiments of the present disclosure.

According to a fifteenth aspect of the embodiments of the present disclosure, a computer program product including computer programs is provided. When the computer programs are executed by a computer, the computer is caused to perform the method according to the second aspect of embodiments of the present disclosure.

According to a sixteenth aspect of the embodiments of the present disclosure, a chip system is provided. The chip system includes at least one processor and an interface for supporting the terminal in realizing the functions involved in the first aspect, e.g., determining or processing at least one of data or information involved in the method described above. In a possible design, the chip system further includes a memory. The memory is configured to store necessary computer programs and data of the terminal. The chip system may consist of chips or may include a chip and other discrete devices.

According to a seventeenth aspect of the embodiments of the present disclosure, a chip system is provided. The chip system includes at least one processor and an interface for supporting the network device in realizing the functions involved in the second aspect, e.g., determining or processing at least one of data or information involved in the method described above. In a possible design, the chip system further includes a memory. The memory is configured to store necessary computer programs and data of the network device. The chip system may consist of chips or may include a chip and other discrete devices.

According to an eighteenth aspect of the embodiments of the present disclosure, a computer program is provided. When the computer program is running on a computer, the computer is caused to perform the method according to the first aspect of embodiments of the present disclosure.

According to a nineteenth aspect of the embodiments of the present disclosure, a computer program is provided. When the computer program is running on a computer, the computer is caused to perform the method according to the second aspect of embodiments of the present disclosure.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic structural diagram of a communication system according to an embodiment of the present disclosure.
FIG. 2 is a flowchart of an indication method according to an embodiment of the present disclosure.
FIG. 3 is a flowchart of an indication method according to an embodiment of the present disclosure.
FIG. 4 is a flowchart of an indication method according to an embodiment of the present disclosure.
FIG. 5 is a flowchart of an indication method according to an embodiment of the present disclosure.
FIG. 6 is a flowchart of an indication method according to an embodiment of the present disclosure.
FIG. 7 is a flowchart of an indication method according to an embodiment of the present disclosure.
FIG. 8 is a flowchart of an indication method according to an embodiment of the present disclosure.
FIG. 9 is a flowchart of an indication method according to an embodiment of the present disclosure.
FIG. 10 is a block diagram of a terminal according to an embodiment of the present disclosure.
FIG. 11 is a block diagram of a network device according to an embodiment of the present disclosure.
FIG. 12 is a block diagram of a communication apparatus according to an embodiment of the present disclosure.
FIG. 13 is a block diagram of a chip according to an embodiment of the present disclosure.

### DETAILED DESCRIPTION

The embodiments of the present disclosure will now be further described with reference to the accompanying drawings and specific implementations.

Reference will now be made in detail to illustrative embodiments, examples of which are illustrated in the accompanying drawings. When the following description refers to the accompanying drawings, the same numbers in different drawings represent the same or similar elements, unless otherwise specified. The implementations set forth in the following illustrative embodiments do not represent all implementations consistent with the present disclosure. Instead, they are merely examples of apparatuses and methods consistent with aspects of the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the present disclosure are also intended to include the plural form, unless the context clearly indicates other meaning. It should also be understood that the term "and/or" as used herein refers to any or all possible combinations of one or more associated listed items.

Depending on the context, the words "if" and "in response to" used here can be interpreted as "when", "while" or "in response to determining".

Embodiments of the present disclosure are described in detail below, examples of which are illustrated in the accompanying drawings, and the same or similar reference numerals refer to the same or similar elements throughout. The embodiments described below with reference to the accompanying drawings are illustrative and intended to explain the present disclosure and are not to be construed as limitations of the present disclosure.

For ease of understanding, the terms involved in the disclosure are introduced firstly.
1. Downlink control information (DCI)
   DCI may include uplink and downlink resource allocation, hybrid automatic repeat request (HARQ) information, power control and other indication information.
2. Modulation and coding scheme (MCS)
   Generally, MCS defines the effective number of bits that a resource element (RE) can carry. Specifically, MCS can define two parts: modulation and code rate.

In order to better understand an indication method disclosed in the embodiments of the present disclosure, a communication system to which the embodiments of the present disclosure can be applied is first described below.

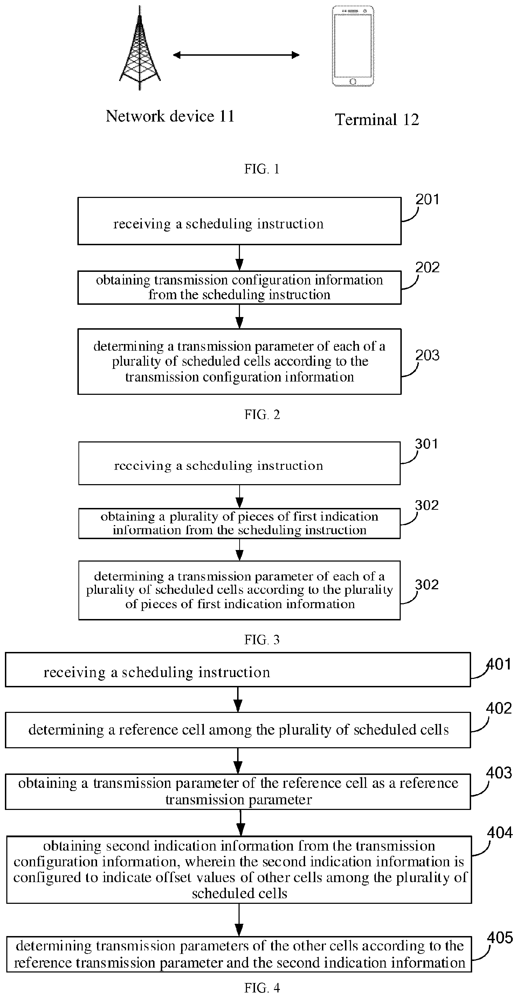

Referring to FIG. 1, FIG. 1 shows a schematic structural diagram of a communication system provided according to an embodiment of the present disclosure. The communication system can include, but is not limited to one network device and one terminal, the number and form of devices shown in FIG. 1 are only intended to illustrate, rather than to constitute limitations on the embodiments of the present disclosure. In actual applications, two or more network devices and two or more terminals can be included. The communication system shown in FIG. 1 is illustrated to include one network device 11 and one terminal 12.

It should be noted that the technical solutions of the embodiments of the present disclosure can be applied to various communication systems, for example, a long term evolution (LTE) system, a 5th generation (5G) mobile communication system, a 5G new radio (NR) system, or other future novel mobile communication systems.

The network device 11 in the embodiments of the present disclosure is an entity for transmitting or receiving signals at a network side. For example, the network device 11 can be an evolved NodeB (eNB), a transmission reception point (TRP), a next generation NodeB (gNB) in the NR system, a base station in other future mobile communication systems or an access point in a wireless fidelity (WiFi) system, etc. In the embodiments of the present disclosure, a specific technology and a specific device adopted by the network device are not limited. The network device provided in the embodiments of the present disclosure can be composed of a central unit (CU) and a distributed unit (DU), and the CU can also be referred to as a control unit, the protocol layer of the network side device, such as a base station, can be split by adopting a CU-DU structure, parts of functions of the protocol layer are centrally controlled by the CU, and parts or all of remaining functions of the protocol layer are distributed in the DU, and the DU is centrally controlled by the CU.

The terminal 12 in the embodiments of the present disclosure is an entity, such as a mobile phone, for receiving or transmitting signals. The terminal can also be referred to as a terminal, user equipment (UE), a mobile station (MS), a mobile terminal (MT), etc. The terminal can be a car with a communication function, a smart car, a mobile phone, a wearable device, a tablet computer (Pad), a computer with a radio transceiver function, a virtual reality (VR) terminal, an augmented reality (AR) terminal, a radio terminal in industrial control, a radio terminal in self-driving, a radio terminal in remote medical surgery, a radio terminal in a smart grid, a radio terminal in transportation safety, a radio terminal in a smart city, a radio terminal in a smart home, etc. In the embodiments of the present disclosure, a specific technology and a specific device form that are adopted by the terminal are not limited.

It can be understood that the communication system described in the embodiments of the present disclosure is intended to describe the technical solutions in the embodiments of the present disclosure more clearly, rather than to constitute a limitation on the technical solutions provided in the embodiments of the present disclosure. It can be known by those of ordinary skill in the art that, with the evolution of a system architecture and the emergence of new service scenarios, the technical solutions provided in the embodiments of the present disclosure is equally applicable to similar technical problems.

It should be noted that in the present disclosure, an indication method provided in any embodiment can be executed alone, or can be executed together in combination with possible implementation methods in other embodiments, or can be executed together in combination with any technology solution in the related art. An indication method and apparatus of the present disclosure provided by the present disclosure will be introduced in detail below with reference to the accompanying drawings.

Referring to FIG. 2, FIG. 2 is a flowchart of an indication method according to an embodiment of the present disclosure. The method may be performed by a terminal. As illustrated in FIG. 2, the method may include, but not limited to, the following steps.

At step 201, a scheduling instruction is received.

Generally, the terminal can obtain the scheduling instruction and the like by receiving DCI carried on a physical downlink control channel (PDCCH), which is not limited in the present disclosure.

Optionally, the scheduling instruction can be DCI, so that the terminal can determine that the scheduling instruction has been received in case of receiving the DCI, which is not limited in the present disclosure.

At step 202, transmission configuration information is obtained from the scheduling instruction.

At step 203, a transmission parameter of each of a plurality of scheduled cells is determined according to the transmission configuration information.

The transmission configuration information may include transmission information corresponding to each scheduled cell, or may include transmission information corresponding to a reference cell among the plurality of scheduled cells, etc., which is not limited in the present disclosure.

Optionally, the transmission parameter includes at least one of: a modulation and coding scheme (MCS); time domain resource allocation (TDRA); or frequency domain resource allocation (FDRA).

For example, the transmission parameter may be the MCS, or may be the TDRA, or may be the FDRA, or may be the MCS and the TDRA, or may be the MCS and the FDRA, or may be the TDRA and the FDRA, or may be the MCS, the TDRA and the FDRA, etc., which is not limited in the present disclosure.

According to the embodiments of the present disclosure, the terminal may firstly receive the scheduling instruction, and then obtain the transmission configuration information from the scheduling instruction and determine the transmission parameter of each of the plurality of scheduled cells according to the transmission configuration information. In this way, by parsing the received scheduling instruction, the transmission configuration information can be determined, and then the transmission parameter of each of the plurality of scheduled cells can be determined according to the transmission configuration information. In other words, a transmission mechanism of a plurality of different cells that are jointly scheduled may be indicated in one scheduling instruction, so that signaling overhead for indicating information can be effectively reduced in case of supporting multi-cell scheduling.

Referring to FIG. 3, FIG. 3 is a flowchart of an indication method according to an embodiment of the present disclosure. The method may be performed by a terminal. As illustrated in FIG. 3, the method may include, but not limited to, the following steps.

At step 301, a scheduling instruction is received.

Optionally, the scheduling instruction is DCI.

At step 302, a plurality of pieces of first indication information are obtained from the scheduling instruction.

At step 303, a transmission parameter of each of a plurality of scheduled cells is determined according to the plurality of pieces of first indication information.

Optionally, the transmission configuration information may include the plurality of pieces of first indication information. The plurality of pieces of first indication information are respectively configured to indicate transmission parameters of the plurality of scheduled cells. For example, the first indication information 1 may be configured to indicate the transmission parameter of the cell 1 among the plurality of scheduled cells, the first indication information 2 may be configured to indicate the transmission parameter of the cell 2 among the plurality of scheduled cells, and so on, which is not limited in the present disclosure.

In the embodiments of the present disclosure, after receiving the scheduling instruction, the terminal may determine the plurality of pieces of first indication information contained in the scheduling instruction by parsing the scheduling instruction, and then determine the transmission parameter of each of the plurality of scheduled cells according to indication of each piece of first indication information, which are not limited in the present disclosure.

Optionally, the transmission parameter includes at least one of: a modulation and coding scheme (MCS); time domain resource allocation (TDRA); or frequency domain resource allocation (FDRA).

For example, in a case that the plurality of scheduled cells include cell 1, cell 2, cell 3 and cell 4, if MCS1, MCS2, MCS3 and MCS4 are obtained by parsing the plurality of pieces of first indication information obtained from the scheduling instruction, it is determined that among the plurality of scheduled cells, the transmission parameter of the cell 1 is the MCS1, the transmission parameter of the cell 2 is the MCS2, the transmission parameter of the cell 3 is the MCS3, and the transmission parameter of the cell 4 is the MCS4.

Alternatively, in a case that the plurality of scheduled cells include cell 1, cell 2, and cell 3, if FDRA1, FDRA2, and FDRA3 are obtained by parsing the plurality of pieces of first indication information obtained from the scheduling instruction, it is determined that among the plurality of scheduled cells, the transmission parameter of the cell 1 is the FDRA1, the transmission parameter of the cell 2 is the FDRA2, and the transmission parameter of the cell 3 is the FDRA3.

Alternatively, in a case that the plurality of scheduled cells include cell 1, cell 2, and cell 3, if TDRA1, TDRA2, and TDRA3 are obtained by parsing the plurality of pieces of first indication information obtained from the scheduling instruction, it is determined that among the plurality of scheduled cells, the transmission parameter of the cell 1 is the TDRA1, the transmission parameter of the cell 2 is the TDRA2, and the transmission parameter of the cell 3 is the TDRA3.

It should be noted that the above examples are only schematic illustrations and cannot be used as limitations on the scheduled cells and transmission parameters in the embodiments of the present disclosure.

Optionally, different information fields in the scheduling instruction can carry transmission configurations of different cells. For example, information field 1 can be used to carry the transmission configuration of cell 1, and information field 2 can be used to carry the transmission configuration of cell 2, and so on, which is not limited in the present disclosure.

According to this embodiment of the present disclosure, the terminal may firstly receive the scheduling instruction, and then obtain the plurality of pieces of first indication information from the scheduling instruction and determine the transmission parameter of each of the plurality of scheduled cells according to the plurality of pieces of first indication information. In this way, by parsing the received scheduling instruction, the plurality of pieces of first indication information contained in the received scheduling instruction can be determined, and then the transmission parameter of each of the plurality of scheduled cells can be determined according to the plurality of pieces of first indication information, so that signaling overhead for indicating information can be effectively reduced in case of supporting multi-cell scheduling.

Referring to FIG. 4, FIG. 4 is a flowchart of an indication method according to an embodiment of the present disclosure. The method may be performed by a terminal. As illustrated in FIG. 4, the method may include, but not limited to, the following steps.

At step 401, a scheduling instruction is received.

Optionally, the scheduling instruction is DCI.

At step 402, a reference cell among a plurality of cells is determined.

It can be understood that, for the plurality of scheduled cells, the reference cell among the plurality of cells may be determined. For example, the received scheduling instruction may be parsed to determine the reference cell among the plurality of scheduled cells. Alternatively, the reference cell among the plurality of cells may also be determined based on a protocol, a network device configuration, etc., which is not limited in the present disclosure.

At step 403, a transmission parameter of the reference cell is obtained as a reference transmission parameter.

Optionally, the transmission parameter includes at least one of: a modulation and coding scheme (MCS); time domain resource allocation (TDRA); or frequency domain resource allocation (FDRA).

The received scheduling instruction can be analyzed to determine the transmission parameter of the reference cell among the plurality of cells, and then the transmission parameter of the reference cell can be determined as the reference transmission parameter corresponding to the plurality of scheduled cells. For example, if the reference cell is cell 1 among the plurality of cells to be scheduled, and the corresponding transmission parameter is TDRA1, then "TDRA1" can be used as the reference transmission parameter, etc., which is not limited in the present disclosure.

At step 404, second indication information is obtained from transmission configuration information. The second indication information is configured to indicate offset values of other cells among the plurality of cells.

It can be understood that, the terminal may obtain the transmission configuration information by parsing the scheduling instruction and obtain the offset values corresponding to the other cells (i.e., the offset values of the transmission parameters of the other cells relative to the reference transmission parameter, etc.) among the plurality of cells based on indication of the second indication information in the transmission configuration information, which is not limited in the present disclosure.

Further, in a case where the transmission parameter is FDRA, the offset value may be an offset value between starting positions of frequency domain allocation, etc., which is not limited in the present disclosure.

For example, in a case that the plurality of scheduled cells include cell 2, cell 3 and cell 4, if the second indication information obtained by the terminal by parsing the scheduling instruction indicates offset value 1, offset value 2 and offset value 3, it can be determined that the offset value of the cell 2 is the offset value 1, the offset value of the cell 3 is the offset value 2, the offset value of the cell 4 is the offset value 3, which is not limited in the present disclosure.

At step 404, transmission parameters of other cells are determined based on the reference transmission parameter and the second indication information.

A sum of the offset value of any other cell indicated by the second indication information and the reference transmission parameter can be used as the transmission parameter of the any other cell, which is not limited in the present disclosure.

For example, if the reference transmission parameter is MCS1, and the second indication information indicates that the offset value of the other cell 1 among the plurality of cells to be scheduled is offset value 2, it can be determined that the transmission parameter of the other cell 1 is MCS1+offset value 2. Alternatively, if the reference transmission parameter is FDRA2, and the second indication information indicates that the offset value of the other cell 2 among the plurality of cells to be scheduled is offset value 3, it can be determined that the transmission parameter of the other cell 2 is FDRA2+offset value 3. The present disclosure is not limited to this.

Optionally, in a case where different information fields carry transmission configurations of different cells, the terminal may determine a correspondence between offset values and information field values through a higher-layer signaling or a physical layer signaling of a network device. The transmission parameters of the other cells can be determined based on the correspondence, the information field values in the scheduling instruction and the reference transmission parameter of the reference cell.

For example, the correspondence between the offset values and the information field values in the scheduling instruction can be shown in Table 1.

**Table 1**

| information field value | offset value |
|---|---|
| 00 | offset value 1 |
| 01 | offset value 2 |
| 10 | offset value 3 |
| 11 | offset value 4 |

For example, in a case where the reference cell among the plurality of cells to be scheduled is cell 5, and the reference transmission parameter of the cell 5 is MCS2, if the information field value "00" carries the transmission configuration of cell 1 among the plurality of cells to be scheduled, then it can be determined that the offset value corresponding to the cell 1 is "offset value 1", and the transmission parameter of the cell 1 is MCS2 + offset value 1. If the information field value "01" carries the transmission configuration of cell 2 among the plurality of cells to be scheduled, then it can be determined that the offset value corresponding to the cell 2 is "offset value 2", and the transmission parameters of the cell 2 is MCS2+offset value 2.

It should be noted that the above examples are only schematic illustrations and cannot be used as limitations on the information field value, the offset value, the reference transmission parameter, the transmission parameter of the cell, etc. in the embodiments of the present disclosure.

It can be understood that each element and each correspondence in Table 1 exist independently; these elements and correspondences are exemplarily listed in the same table, but do not indicate that all elements and correspondences in the table must exist simultaneously as shown in Table 1. The value of each element and each correspondence do not depend on the value of any other element or correspondence in Table 1. Therefore, those skilled in the art can understand that the value of each element and each correspondence in Table 1 forms one independent embodiment.

Optionally, the terminal may obtain the relationship between the transmission information of the cell and the information field value carried in the transmission information or the like based on a protocol, a network device configuration, etc., which is not limited in the present disclosure.

Optionally, different offset values can be set for the aggregation scenario, to better adapt to the transmission configuration of links. For example, for the case of intra-band aggregation and the case of inter-band aggregation, different offset value ranges can be set, which is not limited in the present disclosure.

According to this embodiment of the present disclosure, the terminal may receive the scheduling instruction firstly, and then can determine the reference cell among the plurality of cells, obtain the transmission parameter of the reference cell as the reference transmission parameter, obtain the second indication information configured to indicate the offset values of other cells among the plurality of cells from the transmission configuration information, and determine the transmission parameters of the other cells based on the reference transmission parameter and the second indication information. In this way, by parsing the received scheduling instruction, the reference cell and the reference transmission parameter can be obtained, and the transmission parameters of the other cells among the plurality of scheduled cells can be determined based on the offset values indicated by the second indication information, so that signaling overhead for indicating information can be effectively reduced in case of supporting multi-cell scheduling.

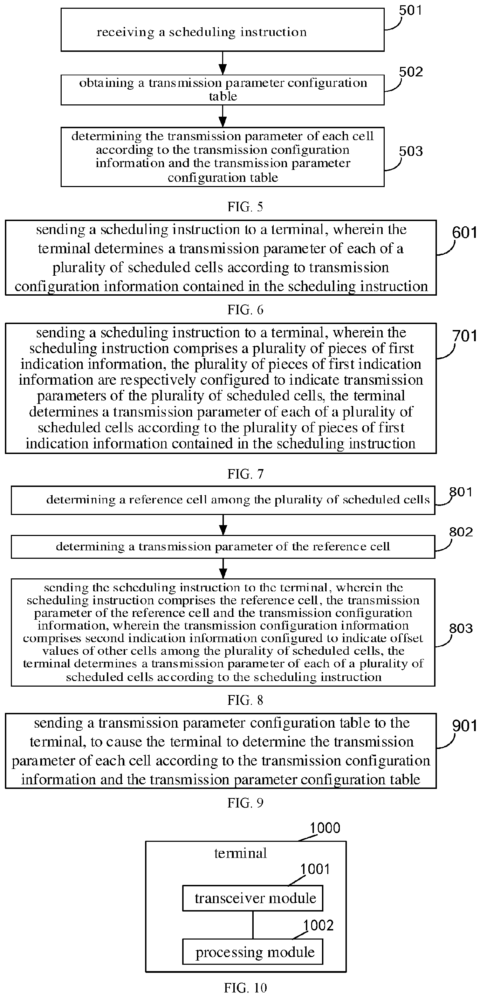

Referring to FIG. 5, FIG. 5 is a flowchart of an indication method according to an embodiment of the present disclosure. The method may be performed by a terminal. As illustrated in FIG. 5, the method may include, but not limited to, the following steps.

At step 501, a scheduling instruction is received.

Optionally, the scheduling instruction is DCI.

Optionally, the scheduling instruction may be a scheduling instruction of one of a plurality of scheduled cells.

For example, if the plurality of scheduled cells include: cell 1, cell 2, cell 3 and cell 4, the scheduling instruction received by the terminal may be a scheduling instruction of the cell 1, or may be a scheduling instruction of the cell 2, or may be a scheduling instruction of the cell 3, or may be a scheduling instruction of the cell 4, etc., which is not limited in the present disclosure.

At step 502, a transmission parameter configuration table is obtained.

The transmission parameter configuration table may include the transmission parameter of each cell among the plurality of cells to be scheduled. For example, the obtained transmission parameter configuration table may be shown in Table 2.

**Table 2**

| information field value | MCS |
|---|---|
| 00 | MCS1, MCS2, MCS3 |
| 01 | MCS1 |
| 10 | MCS1, MCS2 |
| 11 | MCS2 |

**It** should be noted that the above table 2 is only illustrative and cannot be used as limitations on the information field value, the MCS, the correspondence between the information field value and the MCS, etc. in the embodiments of the present disclosure.

Optionally, the transmission parameter configuration table may also include the reference transmission parameter and the offset values, which is not limited in the present disclosure.

For example, the obtained transmission parameter configuration table may be shown in Table 3.

**Table 3**

| information field value | MCS |
|---|---|
| 00 | MCS1, offset value 1, offset value 2 |
| 01 | MCS1 |
| 10 | MCS1, offset value 1 |
| 11 | MCS2 |

**It** should be noted that the above table 3 is only illustrative and cannot be used as limitations on the information field value, the MCS, the offset value, etc. in the embodiments of the present disclosure.

At step 503, a transmission parameter of each cell is determined according to transmission configuration information and the transmission parameter configuration table.

Optionally, the transmission parameter includes at least one of: a modulation and coding scheme (MCS); time domain resource allocation (TDRA); or frequency domain resource allocation (FDRA).

For example, in a case where the transmission parameter configuration table is shown as Table 2, if it is determined, by parsing the transmission configuration information, that the information field value "00" carries the transmission configuration information of cell 1, cell 2 and cell 3, then it can be determined that the transmission parameter of the cell 1 is MCS1, the transmission parameter of the cell 2 is MCS2, and the transmission parameter of the cell 3 is MCS3. Alternatively, a case where the transmission parameter configuration table is shown as Table 3, if it is determined, by parsing the transmission configuration information, that the information field value "00" carries the transmission configuration information of cell 1 and cell 2, then it can be determined that the transmission parameter of the cell 1 is MCS1+offset value 1, and the transmission parameter of the cell 2 is MCS2+offset value 2. Alternatively, if the information field value "11" carries the transmission configuration information of cell 3, then it can be determined that the transmission parameter of the cell 3 is MCS2.

It should be noted that the above examples are only schematic illustrations and cannot be used as limitations on the way of determining the transmission parameter of each cell, etc. in the embodiments of the present disclosure.

Optionally, in a case where the transmission parameter is FDRA, an FDRA configuration table for multicarrier (MC) scheduling can be configured in advance. Different values in the table may indicate the FDRA selection for multi-cell scheduling. The FDRA configuration table may include the FDRA, or may include a reference FDRA and the offset value, etc. Regarding the specific contents and implementations, the reference can be made to the description of Table 2 and Table 3, which are not elaborated herein.

Optionally, in a case where the transmission parameter is TDRA, a transmission parameter configuration table including the TDRA, or including the TDRA and the offset value can be configured in advance. Regarding the specific contents and implementations, the reference can be made to the description of Table 2 and Table 3, which are not elaborated herein.

According to this embodiment of the present disclosure, the terminal may receive the scheduling instruction firstly, and then can obtain the transmission parameter configuration table, and determine the transmission parameter of each cell based on the transmission configuration information and the transmission parameter configuration table. In this way, by parsing the received scheduling instruction, the transmission parameter configuration table can be obtained, and the transmission parameter of each cell among the plurality of scheduled cells can be determined in combination with the configuration information, so that signaling overhead for indicating information can be effectively reduced in case of supporting multi-cell scheduling.

Referring to FIG. 6, FIG. 6 is a flowchart of an indication method according to an embodiment of the present disclosure. The method may be performed by a network device. As illustrated in FIG. 6, the method may include, but not limited to, the following steps.

**At** step 601, a scheduling instruction is sent to a terminal. The terminal determines a transmission parameter of each of a plurality of scheduled cells according to transmission configuration information contained in the scheduling instruction.

**It** can be understood that the network device can add the transmission configuration information of the plurality of scheduled cells in the scheduling instruction, and then can send the scheduling instruction to the terminal. After receiving the scheduling instruction, the terminal can obtain the transmission configuration information contained in the scheduling instruction by parsing it, and then can determine the transmission parameter of each of the plurality of scheduled cells based on the transmission configuration information. In other words, a transmission mechanism of a plurality of different cells that are j ointly scheduled may be indicated in one scheduling instruction, so that signaling overhead for indicating information can be effectively reduced in case of supporting multi-cell scheduling.

Optionally, the scheduling instruction can be DCI, so that the terminal can determine that the scheduling instruction has been received in case of receiving the DCI, which is not limited in the present disclosure.

Optionally, the transmission parameter includes at least one of: a modulation and coding scheme (MCS); time domain resource allocation (TDRA); or frequency domain resource allocation (FDRA).

For example, the transmission parameter may be the MCS, or may be the TDRA, or may be the FDRA, or may be the MCS and the TDRA, or may be the MCS and the FDRA, or may be the TDRA and the FDRA, or may be the MCS, the TDRA and the FDRA, etc., which is not limited in the present disclosure.

According to this embodiment of the present disclosure, the network device may send the scheduling instruction to the terminal, the scheduling instruction may include the transmission configuration information, and the terminal may determine the transmission parameter of each of the plurality of scheduled cells according to the transmission configuration information contained in the scheduling instruction, that is, a transmission mechanism of a plurality of different cells that are jointly scheduled may be indicated in one scheduling instruction, so that signaling overhead for indicating information can be effectively reduced in case of supporting multi-cell scheduling.

Referring to FIG. 7, FIG. 7 is a flowchart of an indication method according to an embodiment of the present disclosure. The method may be performed by a network device. As illustrated in FIG. 7, the method may include, but not limited to, the following steps.

**At** step 701, a scheduling instruction is sent to a terminal. The scheduling instruction includes a plurality of pieces of first indication information. The plurality of pieces of first indication information are respectively configured to indicate transmission parameters of a plurality of cells to be scheduled. The terminal determines a transmission parameter of each of the plurality of scheduled cells according to the plurality of pieces of first indication information contained in the scheduling instruction.

Optionally, the scheduling instruction is DCI.

Optionally, the transmission configuration information of the scheduling instruction may include the plurality of pieces of first indication information. The plurality of pieces of first indication information are respectively configured to indicate the transmission parameters of the plurality of scheduled cells. For example, the first indication information 1 may be configured to indicate the transmission parameter of the cell 1 among the plurality of scheduled cells, the first indication information 2 may be configured to indicate the transmission parameter of the cell 2 among the plurality of scheduled cells, and so on, which is not limited in the present disclosure.

In the embodiments of the present disclosure, the network device may send the scheduling instruction including the plurality of pieces of first indication information to the terminal. After receiving the scheduling instruction, the terminal may determine the plurality of pieces of first indication information contained in the scheduling instruction by parsing the scheduling instruction, and then determine the transmission parameter of each of the plurality of scheduled cells according to indication of each piece of first indication information, so that a transmission mechanism of a plurality of different cells that are jointly scheduled may be indicated in one scheduling instruction, thereby effectively reducing signaling overhead for indicating information in case of supporting multi-cell scheduling.

Optionally, the transmission parameter includes at least one of: a modulation and coding scheme (MCS); time domain resource allocation (TDRA); or frequency domain resource allocation (FDRA).

For example, in a case that the plurality of scheduled cells include cell 1, cell 2, cell 3 and cell 4, if the transmission parameter of the cell 1 is MCS1, the transmission parameter of the cell 2 is MCS2, the transmission parameter of the cell 3 is MCS3, and the transmission parameter of the cell 4 is MCS4, then the transmission parameters of the four cells can be indicated through the first indication information 1, the first indication information 2, the first indication information 3, and the first indication information 4. After receiving the scheduling instruction, the terminal may determine, by parsing the plurality of pieces of first indication information obtained from the scheduling instruction, that among the plurality of scheduled cells, the transmission parameter of the cell 1 is the MCS1, the transmission parameter of the cell 2 is the MCS2, the transmission parameter of the cell 3 is the MCS3, and the transmission parameter of the cell 4 is the MCS4.

Alternatively, in a case that the plurality of scheduled cells include cell 1, cell 2, and cell 3, if the transmission parameter of the cell 1 is FDRA1, the transmission parameter of the cell 2 is FDRA2, and the transmission parameter of the cell 3 is FDRA3, then the transmission parameters of the three cells can be indicated by adding three pieces of first indication information in the scheduling instruction. After receiving the scheduling instruction, the terminal may determine, by parsing the three pieces of first indication information obtained from the scheduling instruction, that among the plurality of scheduled cells, the transmission parameter of the cell 1 is the FDRA1, the transmission parameter of the cell 2 is the FDRA2, and the transmission parameter of the cell 3 is the FDRA3.

Alternatively, in a case that the plurality of scheduled cells include cell 1, cell 2, and cell 3, if the transmission parameter of the cell 1 is TDRA1, the transmission parameter of the cell 2 is TDRA2, and the transmission parameter of the cell 3 is TDRA3, then the transmission parameters of the three cells can be indicated by adding three pieces of first indication information in the scheduling instruction. After receiving the scheduling instruction, the terminal may determine, by parsing the three pieces of first indication information obtained from the scheduling instruction, that among the plurality of scheduled cells, the transmission parameter of the cell 1 is the TDRA1, the transmission parameter of the cell 2 is the TDRA2, and the transmission parameter of the cell 3 is the TDRA3.

It should be noted that the above examples are only schematic illustrations and cannot be used as limitations on the scheduled cells and transmission parameters in the embodiments of the present disclosure.

Optionally, different information fields in the scheduling instruction can carry transmission configurations of different cells respectively. For example, information field 1 can be used to carry the transmission configuration of cell 1, and information field 2 can be used to carry the transmission configuration of cell 2, and so on, which is not limited in the present disclosure.

According to this embodiment of the present disclosure, the network device may send the scheduling instruction including the plurality of pieces of first indication information to the terminal, and after receiving the scheduling instruction, the terminal may determine the plurality of pieces of first indication information contained in the scheduling instruction by parsing the scheduling instruction and determine the transmission parameter of each of the plurality of scheduled cells according to indication of each piece of first indication information, that is, a transmission mechanism of a plurality of different cells that are jointly scheduled may be indicated in one scheduling instruction, so that signaling overhead for indicating information can be effectively reduced in case of supporting multi-cell scheduling.

Referring to FIG. 8, FIG. 8 is a flowchart of an indication method according to an embodiment of the present disclosure. The method may be performed by a network device. As illustrated in FIG. 8, the method may include, but not limited to, the following steps.

At step 801, a reference cell among a plurality of scheduled cells is determined.

**It** can be understood that, the network device may determine the reference cell from the plurality of scheduled cells according to a protocol, or the network device may determine any cell among the plurality of scheduled cells as the reference cell, etc., which is not limited in the present disclosure.

At step 802, a transmission parameter of the reference cell is determined.

It can be understood that, the network device may further determine the transmission parameter of the reference cell after determining the reference cell from the plurality of cells to be scheduled. For example, the network device may determine the transmission parameter of the reference cell according to a protocol, etc., which is not limited in the present disclosure.

**At** step 803, a scheduling instruction is sent to a terminal. The scheduling instruction includes the reference cell, the transmission parameter of the reference cell and the transmission configuration information. The transmission configuration information includes second indication information. The second indication information is configured to indicate offset values of other cells among the plurality of cells. The terminal determines a transmission parameter of each of the plurality of scheduled cells according to the scheduling instruction.

Optionally, the scheduling instruction is DCI.

After determining the reference cell, and the transmission parameter of the reference cell, the network device may add the reference cell, the transmission parameter of the reference cell and the transmission configuration information in one scheduling instruction, and send the scheduling instruction to the terminal, so that the terminal may determine the transmission parameter of each of the plurality of scheduled cells according to the reference cell, the transmission parameter of the reference cell and the offset values of the other cells among the plurality of cells indicated in the second indication information, so that a transmission mechanism of a plurality of different cells that are jointly scheduled may be indicated in one scheduling instruction, thereby effectively reducing signaling overhead for indicating information in case of supporting multi-cell scheduling.

Optionally, the transmission parameter includes at least one of: a modulation and coding scheme (MCS); time domain resource allocation (TDRA); or frequency domain resource allocation (FDRA).

Optionally, the scheduling instruction may be a scheduling instruction of one of the plurality of scheduled cells.

For example, if the plurality of scheduled cells include: cell 1, cell 2, and cell 3, the scheduling instruction sent by the network device to the terminal may be a scheduling instruction of the cell 1, or may be a scheduling instruction of the cell 2, or may be a scheduling instruction of the cell 3, etc., which is not limited in the present disclosure.

For example, if the other cells among the plurality of scheduled cells include: cell 2, cell 3, and cell 4, the offset values corresponding respectively to the other cells are offset value 1, offset value 2 and offset value 3, then the offset values of the cell 2, the cell 3 and the cell 4 among the plurality of scheduled cells may be indicated by the second indication information, which is not limited in the present disclosure.

Further, in a case where the transmission parameter is FDRA, the offset value may be an offset value between starting positions of frequency domain allocation, etc., which is not limited in the present disclosure.

Optionally, in a case where different information fields carry transmission configurations of different cells, the network device may add a correspondence between offset values and information field values in the scheduling instruction.

For example, if the correspondence between offset values and information field values is shown as Table 1, the correspondence can be added in the scheduling instruction. By sending the scheduling instruction to the terminal, the terminal may obtain the correspondence between offset values and information field values, which is not limited in the present disclosure.

Optionally, different offset values can be set for the aggregation scenario, to better adapt to the transmission configuration of links. For example, for the case of intra-band aggregation and the case of inter-band aggregation, different offset value ranges can be set, which is not limited in the present disclosure.

According to this embodiment of the present disclosure, the network device may determine the reference cell among the plurality of scheduled cells firstly, and then can determine the transmission parameter of the reference cell and send the scheduling instruction to the terminal. The scheduling instruction includes the reference cell, the transmission parameter of the reference cell and the transmission configuration information, and the transmission configuration information includes the second indication information. The second indication information is configured to indicate the offset values of the other cells among the plurality of cells. The terminal may determine the transmission parameter of each of the plurality of scheduled cells based on the transmission configuration information contained in the scheduling instruction. In this way, the network device may send the scheduling instruction to the terminal, and the terminal may determine the transmission parameter of each of the plurality of scheduled cells based on the reference cell, the transmission parameter of the reference cell and the offset values of the other cells among the plurality of cells indicated by the second indication information in the transmission configuration information that are contained in the scheduling instruction, that is, a transmission mechanism of a plurality of different cells that are jointly scheduled may be indicated in one scheduling instruction, so that signaling overhead for indicating information can be effectively reduced in case of supporting multi-cell scheduling.

Referring to FIG. 9, FIG. 9 is a flowchart of an indication method according to an embodiment of the present disclosure. The method may be performed by a network device. As illustrated in FIG. 9, the method may include, but not limited to, the following steps.

At step 901, a transmission parameter configuration table is sent to a terminal, so that the terminal determines a transmission parameter of each of a plurality of scheduled cells according to transmission configuration information and the transmission parameter configuration table.

The transmission parameter configuration table may include the transmission parameter of each of a plurality of cells to be scheduled. For example, the obtained transmission parameter configuration table may be shown as Table 2, the transmission parameter configuration table may be added in the scheduling instruction, and then the scheduling instruction may be sent to the terminal, so that the terminal determines the transmission parameter of each of the plurality of scheduled cells according to the transmission configuration information and the transmission parameter configuration table in the scheduling instruction, which is not limited in the present disclosure.

Optionally, the transmission parameter configuration table may also include the reference transmission parameter and the offset value, etc., for example, the transmission parameter configuration table may be shown as Table 3, the transmission parameter configuration table may be added in the scheduling instruction, and then the scheduling instruction may be sent to the terminal, so that the terminal determines the transmission parameter of each of the plurality of scheduled cells according to the reference transmission parameter and the offset value in the scheduling instruction, which is not limited in the present disclosure.

Optionally, the transmission parameter includes at least one of: a modulation and coding scheme (MCS); time domain resource allocation (TDRA); or frequency domain resource allocation (FDRA).

Optionally, in a case where the transmission parameter is FDRA, an FDRA configuration table for multicarrier (MC) scheduling can be configured in advance. Different values in the table may indicate the FDRA selection for multi-cell scheduling. The FDRA configuration table may include the FDRA, or may include a reference FDRA and the offset value, etc. Regarding the specific contents and implementations, the reference can be made to the description of Table 2 and Table 3, which are not elaborated herein.

Optionally, in a case where the transmission parameter is TDRA, a transmission parameter configuration table including the TDRA, or including the TDRA and the offset value can be configured in advance. Regarding the specific contents and implementations, the reference can be made to the description of Table 2 and Table 3, which are not elaborated herein.

According to the embodiments of the present disclosure, the network device may send the transmission parameter configuration table to the terminal, so that the terminal determines the transmission parameter of each of the plurality of scheduled cell based on the transmission configuration information and the transmission parameter configuration table in the scheduling instruction. In this way, a transmission mechanism of a plurality of different cells that are jointly scheduled may be indicated in one scheduling instruction, so that signaling overhead for indicating information can be effectively reduced in case of supporting multi-cell scheduling.

Referring to FIG. 10, FIG. 10 is a block diagram of a terminal 1000 according to an embodiment of the present disclosure. The terminal 1000 shown in FIG. 10 may include a transceiver module 1001 and a processing module 1002. The transceiver module 1001 may include a sending module and/or a receiving module. The sending module is used to implement the sending function, and the receiving module is used to implement the receiving function. The transceiver module 1001 may implement the sending function and/or the receiving function.

The terminal 1000 includes the transceiver module 1001 configured to receive a scheduling instruction, and the processing module 1002 configured to obtain transmission configuration information from the scheduling instruction and determine a transmission parameter of each of a plurality of scheduled cells according to the transmission configuration information.

Optionally, the transmission configuration information includes: a plurality of pieces of first indication information, in which the plurality of pieces of first indication information are respectively configured to indicate transmission parameters of the plurality of scheduled cells.

Optionally, the processing module 1002 is configured to: determine a reference cell among the plurality of scheduled cells; obtain a transmission parameter of the reference cell as a reference transmission parameter; obtain second indication information from the transmission configuration information, in which the second indication information is configured to indicate offset values of other cells among the plurality of scheduled cells; and determine transmission parameters of the other cells according to the reference transmission parameter and the second indication information.

Optionally, the processing module 1002 is configured to: obtain a transmission parameter configuration table; and determine the transmission parameter of each cell according to the transmission configuration information and the transmission parameter configuration table.

Optionally, the transmission parameter configuration table includes a reference transmission parameter and an offset value.

Optionally, the scheduling instruction is a scheduling instruction for one of the plurality of scheduled cells.

Optionally, the transmission parameter includes at least one of: a modulation and coding scheme (MCS); time domain resource allocation (TDRA); or frequency domain resource allocation (FDRA).

Optionally, the scheduling instruction is downlink control information (DCI).

In the present disclosure, the terminal may firstly receive the scheduling instruction, and then obtain the transmission configuration information from the scheduling instruction and determine the transmission parameter of each of the plurality of scheduled cells according to the transmission configuration information.. In this way, by parsing the received scheduling instruction, the transmission configuration information can be determined, and then the transmission parameter of each of the plurality of scheduled cells can be determined according to the transmission configuration information, so that signaling overhead for indicating information can be effectively reduced in case of supporting multi-cell scheduling. The signaling overhead for indicating information can be effectively reduced.

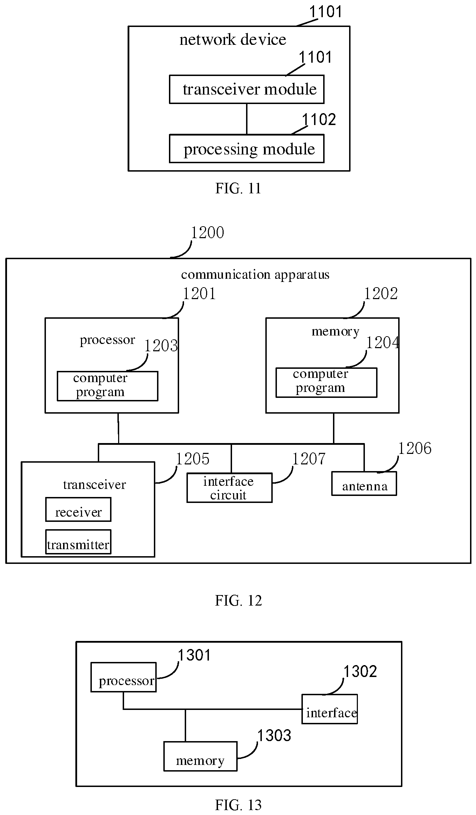

Referring to FIG. 11, FIG. 11 is a block diagram of a network device 1100 according to an embodiment of the present disclosure. The network device 1100 shown in FIG. 11 may include a transceiver module 1101 and a processing module 1102. The transceiver module 1101 may include a sending module and/or a receiving module. The sending module is used to implement the sending function, and the receiving module is used to implement the receiving function. The transceiver module 1101 may implement the sending function and/or the receiving function.

The network device 1100 includes the transceiver module 1101 configured to send a scheduling instruction to a terminal, in which the terminal determines a transmission parameter of each of a plurality of scheduled cells according to transmission configuration information contained in the scheduling instruction.

Optionally, the transmission configuration information includes: a plurality of pieces of first indication information, in which the plurality of pieces of first indication information are respectively configured to indicate transmission parameters of the plurality of scheduled cells.

Optionally, the network device further includes a processing module 1102 configured to: determine a reference cell among the plurality of scheduled cells and determine a transmission parameter of the reference cell. The transceiver module 1101 is further configured to send the scheduling instruction to the terminal, in which the scheduling instruction includes the reference cell, the transmission parameter of the reference cell and the transmission configuration information, in which the transmission configuration information includes second indication information configured to indicate offset values of other cells among the plurality of scheduled cells.

Optionally, the transceiver module 1101 is further configured to: send a transmission parameter configuration table to the terminal, to cause the terminal to determine the transmission parameter of each cell according to the transmission configuration information and the transmission parameter configuration table.

Optionally, the transmission parameter configuration table includes a reference transmission parameter and an offset value.

Optionally, the scheduling instruction is a scheduling instruction for one of the plurality of scheduled cells.

Optionally, the transmission parameter includes at least one of: a modulation and coding scheme (MCS); time domain resource allocation (TDRA); or frequency domain resource allocation (FDRA).

Optionally, the scheduling instruction is downlink control information (DCI).

In the present disclosure, the network device may send the scheduling instruction to the terminal, the scheduling instruction may include the transmission configuration information, and the terminal may determine the transmission parameter of each of the plurality of scheduled cells according to the transmission configuration information contained in the scheduling instruction, that is, a transmission mechanism of a plurality of different cells that are jointly scheduled may be indicated in one scheduling instruction, so that signaling overhead for indicating information can be effectively reduced in case of supporting multi-cell scheduling.

Please refer to Fig. 12, which is a block diagram of another communication apparatus 1200 provided in an embodiment of the present invention. The communication apparatus 1200 may be a network device, a terminal, a chip, chip system, or processor that supports the network device to implement the above method, or a chip, chip system, or processor that supports the terminal to implement the above method. This apparatus can be used to implement the methods described in the above method embodiments, which can be referred to in the description of the above method embodiments.

The communication apparatus 1200 may include one or more processors 1201. The processor 1201 may be a general-purpose processor or a dedicated processor, etc. For example, it may be a baseband processor or a central processing unit. The baseband processor can be used to process communication protocols and communication data, while the central processor can be used to control communication apparatuses (such as base stations, baseband chips, terminals, terminal chips, DU or CU, etc.), execute computer programs, and process data from computer programs.

Optionally, the communication apparatus 120 may also include one or more memories 1202, on which computer programs 1201 may be stored. The processor 1201 executes the computer programs 1204 to enable the communication apparatus 120 to perform the methods described in the above method embodiments. Optionally, the memory 1202 may also store data. The communication apparatus 120 and memory 1202 can be set separately or integrated together.

Optionally, the communication apparatus 120 may also include a transceiver 1205 and an antenna 1206. The transceiver 1205 can be referred to as a transceiver unit, transceiver machine, or transceiver circuit, etc., used to achieve transceiver functions. The transceiver 1205 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication apparatus 1200 may also include one or more interface circuits 1207. The interface circuit 1207 is used to receive code instructions and transmit them to the processor 1201. The processor 1201 executes the code instructions to cause the communication apparatus 1200 to perform the method described in the above method embodiments.

The communication apparatus 1200 is a terminal: the processor 1201 is used to execute steps 202 and 203 shown in FIG. 2, steps 302 and 303 shown in FIG. 3, steps 402, 403, 404 and 405 shown in FIG. 4, steps 502 and 503 shown in FIG. 5, etc. The transceiver 705 is used to execute step 201 shown in FIG. 2, step 301 shown in FIG. 3, step 401 shown in FIG. 4 and step 501 shown in FIG. 5, etc.

The communication apparatus 1200 is a network device: the processor 1201 is used to execute steps 801 and 802 shown in FIG. 8 etc. The transceiver 705 is used to execute step 601 shown in FIG. 6, step 701 shown in FIG. 7, step 803 shown in FIG. 8 and step 901 shown in FIG. 9, etc.

In one implementation, the processor 1201 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 1201 may store a computer program 1203 that runs on the processor 1201 and enables the communication apparatus 1200 to perform the method described in the above method embodiments. The computer program 1203 may be fixed in the processor 1201, in which case the processor 1201 may be implemented by hardware.

In one implementation, the communication apparatus 1200 may include a circuit that can perform the functions of sending, receiving, or communicating as described in the aforementioned method embodiments. The processor and transceiver described in this invention can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication apparatus described in the above embodiments may be a terminal, but the scope of the communication apparatus described in this invention is not limited to this, and the structure of the communication apparatus may not be limited by FIG. 12. The communication apparatus may be a standalone device or a part of a larger device. For example, the communication apparatus may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
**(5)** Receiver, terminal, intelligent terminal, cellular phone, wireless device, handheld device, mobile unit, vehicle mounted device, network device, cloud device, artificial intelligence device, etc;
(6) Others and so on.

For the case where the communication apparatus can be a chip or a chip system, please refer to the schematic diagram of the chip structure shown in FIG. 13. The chip shown in FIG. 13 includes a processor 1301 and an interface 1302. The number of processors 1301 may be one or more, and the number of interfaces 1302 may be multiple.

For the case where the chip is used to implement the functions of the terminal in the embodiments of the present disclosure, the interface 1302 is used to execute step 201 shown in FIG. 2, step 301 shown in FIG. 3, step 401 shown in FIG. 4 and step 501 shown in FIG. 5, etc.

For the case where the chip is used to implement the functions of the network device in the embodiments of the present disclosure, the interface 1302 is used to execute step 601 shown in FIG. 6, step 701 shown in FIG. 7, step 803 shown in FIG. 8 and step 901 shown in FIG. 9, etc.

Optionally, the chip also includes a memory 1303 for storing necessary computer programs and data.

Technicians in this field can also understand that various illustrative logical blocks and steps listed in the embodiments of the present invention can be implemented by electronic hardware, computer software, or a combination of both. Whether such functionality is implemented by hardware or software depends on the specific application and the design requirements of the entire system. Technicians in this field can use various methods to implement the described functions for each specific application, but such implementation should not be understood as exceeding the scope of protection of the disclosed embodiments.

The present invention also provides a readable storage medium storing instructions that, when executed by a computer, implement the functions of any of the method embodiments described above.

The present invention also provides a computer program product that, when executed by a computer, implements the functions of any of the method embodiments described above.

In the above embodiments, it can be fully or partially implemented by software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present invention is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this invention are only for the convenience of description and are not intended to limit the scope of the disclosed embodiments, but also indicate the order of occurrence.

"At least one" in the present invention can also be described as one or more, and "multiple" \can be two, three, four, or more, without limitation in this invention. In embodiments of the present invention, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The corresponding relationships shown in each table in this invention can be configured or predefined. The values of the information in each table are only examples and can be configured as other values, which are not limited in this application. When configuring the correspondence between information and various parameters, it is not necessarily required to configure all the corresponding relationships shown in each table. For example, in the table of this application, the corresponding relationships shown in certain rows may not be configured. For example, appropriate deformation adjustments can be made based on the above table, such as splitting, merging, and so on. The titles in the above tables indicate that the names of the parameters can also be other names that the communication apparatus can understand, and the values or representations of the parameters can also be other values or representations that the communication apparatus can understand. The above tables can also be implemented using other data structures, such as arrays, queues, containers, stacks, linear tables, pointers, linked lists, trees, graphs, structures, classes, heaps, hash tables, etc.

The term "predefined" in this disclosure can be understood as defined, defined in advance, stored, pre-stored, pre-negotiated, pre-configured, solidified, or pre-fired.

Those skilled in the art will recognize that the units and algorithm steps described in the embodiments disclosed in this article can be implemented using electronic hardware, or a combination of computer software and electronic hardware. Whether these functions are executed in hardware or software depends on the specific application and design constraints of the technical solution. Professional technicians can use different methods to achieve the described functions for each specific application, but such implementation should not be considered beyond the scope of this application.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present application, but the scope of protection of the present application is not limited to this. Any skilled person familiar with the technical field can easily think of changes or replacements within the technical scope disclosed in the present application, which should be included in the scope of protection of the present application. Therefore, the scope of protection of this application should be based on the scope of protection of the claims.

## Claims

1. An indication method, performed by a terminal, comprising:
receiving a scheduling instruction;
obtaining transmission configuration information from the scheduling instruction; and
determining a transmission parameter of each of a plurality of scheduled cells according to the transmission configuration information.

2. The method according to claim 1, wherein the transmission configuration information comprises:
a plurality of pieces of first indication information, wherein the plurality of pieces of first indication information are respectively configured to indicate transmission parameters of the plurality of scheduled cells.

3. The method according to claim 1, wherein determining the transmission parameter of each of the plurality of scheduled cells according to the transmission configuration information comprises:
determining a reference cell among the plurality of scheduled cells;
obtaining a transmission parameter of the reference cell as a reference transmission parameter;
obtaining second indication information from the transmission configuration information, wherein the second indication information is configured to indicate offset values of other cells among the plurality of scheduled cells; and
determining transmission parameters of the other cells according to the reference transmission parameter and the second indication information.

4. The method according to claim 1, wherein determining the transmission parameter of each of the plurality of scheduled cells according to the transmission configuration information comprises:
obtaining a transmission parameter configuration table; and
determining the transmission parameter of each cell according to the transmission configuration information and the transmission parameter configuration table.

5. The method according to claim 4, wherein the transmission parameter configuration table comprises a reference transmission parameter and an offset value.

6. The method according to claim 1, wherein the scheduling instruction is a scheduling instruction for one of the plurality of scheduled cells.

7. The method according to any of claims 1-6, wherein the transmission parameter comprises at least one of:
a modulation and coding scheme (MCS);
time domain resource allocation (TDRA); or
frequency domain resource allocation (FDRA).

8. The method according to any of claims 1-6, wherein the scheduling instruction is downlink control information (DCI).

9. An indication method, performed by a network device, comprising:
sending a scheduling instruction to a terminal, wherein the terminal determines a transmission parameter of each of a plurality of scheduled cells according to transmission configuration information contained in the scheduling instruction.

10. The method according to claim 9, wherein the transmission configuration information comprises:
a plurality of pieces of first indication information, wherein the plurality of pieces of first indication information are respectively configured to indicate transmission parameters of the plurality of scheduled cells.

11. The method according to claim 9, wherein sending the scheduling instruction to the terminal comprises:
determining a reference cell among the plurality of scheduled cells;
determining a transmission parameter of the reference cell; and
sending the scheduling instruction to the terminal, wherein the scheduling instruction comprises the reference cell, the transmission parameter of the reference cell and the transmission configuration information, wherein the transmission configuration information comprises second indication information configured to indicate offset values of other cells among the plurality of scheduled cells.

12. The method according to claim 9, wherein sending the scheduling instruction to the terminal comprises:
sending a transmission parameter configuration table to the terminal, to cause the terminal to determine the transmission parameter of each cell according to the transmission configuration information and the transmission parameter configuration table.

13. The method according to claim 12, wherein the transmission parameter configuration table comprises a reference transmission parameter and an offset value.

14. The method according to claim 9, wherein the scheduling instruction is a scheduling instruction for one of the plurality of scheduled cells.

15. The method according to any of claims 9-14, wherein the transmission parameter comprises at least one of:
a modulation and coding scheme (MCS);
time domain resource allocation (TDRA); or
frequency domain resource allocation (FDRA).

16. The method according to any of claims 9-14, wherein the scheduling instruction is downlink control information (DCI).

17. A terminal, comprising:
a transceiver module, configured to receive a scheduling instruction; and
a processing module, configured to obtain transmission configuration information from the scheduling instruction, and determine a transmission parameter of each of a plurality of scheduled cells according to the transmission configuration information.

18. A network device, comprising:
a transceiver module, configured to send a scheduling instruction to a terminal, wherein the terminal determines a transmission parameter of each of a plurality of scheduled cells according to transmission configuration information contained in the scheduling instruction.

19. A communication apparatus, comprising: a processor, and a memory storing computer programs, when the computer programs stored in the memory are executed by the processor, the communication apparatus is caused to perform the method according to any one of claims 1 to 8.

20. A communication apparatus, comprising: a processor, and a memory storing computer programs, when the computer programs stored in the memory are executed by the processor, the communication apparatus is caused to perform the method according to any one of claims 9 to 16.

21. A computer-readable storage medium for storing instructions, wherein when the instructions are executed, the method according to any one of claims 1 to 8 is implemented.

22. A computer-readable storage medium for storing instructions, wherein when the instructions are executed, the method according to any one of claims 9 to 16 is implemented.
